# EUROPEAN PATENT APPLICATION

(11) **EP 4 693 651 A1**
(43) Date of publication of application: **11.02.2026**
(21) Application number: 23929510.8
(22) Date of filing: 31.03.2023
(51) Int. Cl.: H01M 50/211

(54) **BATTERY MODULE AND ELECTRIC DEVICE**

(71) Applicant: Xiamen Ampack Technology Limited, Xiamen City, Fujian Province 361000 (CN)
(72) Inventor: LI, Kunlong, Xiamen, Fujian 361000 (CN); NONG, Wenbin, Xiamen, Fujian 361000 (CN); WANG, Pengfei, Xiamen, Fujian 361000 (CN)
(74) Representative: Icosa
(86) International application number: PCT/CN2023/085764
(87) International publication number: WO 2024/197927

(57) **Abstract**

This application provides a battery module and an electric device. The battery module includes a plurality of battery cell units arranged along a first direction. Each battery cell unit includes a battery cell and a bracket. The battery cell includes a battery cell housing and an electrode terminal. The battery cell housing includes a body portion and a first sealing portion. The first sealing portion includes a first connection portion, a first bending portion, and a second bending portion. The first bending portion and the second bending portion are disposed opposite to each other along a third direction. The electrode terminal extends out of the battery cell housing from the first connection portion. The bracket includes a first portion, a first side portion, and a second side portion. The first portion covers a part of the first connection portion. The first side portion covers the first bending portion. The second side portion covers the second bending portion. A part of the first connection portion is located between the body portion and the first portion, and a part of the first connection portion is located between the first side portion and the second side portion. The battery module enhances the protection for the first sealing portion, provides a swelling space for the first sealing portion, and reduces the influence on the sealing performance of the first sealing portion.

## Description

### TECHNICAL FIELD

This application relates to the field of energy storage technologies, and in particular, to a battery module and an electric device.

### BACKGROUND

A battery cell in a battery module seals a battery cell housing through a sealing portion. The strength of the sealing portion is relatively low and prone to damage, leading to battery cell leakage, which affects the normal use of the battery cell. To enhance the protection of the sealing portion, it is currently common to cover the entire sealing portion with a bracket or apply potting protection for the sealing portion. However, this not only affects the heat dissipation of the battery cell but also is not conducive to the pressure relief inside the battery cell, affecting the sealing performance of the battery cell.

### SUMMARY

In view of this, it is necessary to provide a battery module and an electric device that can protect the sealing portion, facilitate pressure relief, and reduce the influence on the sealing performance of the battery cell.

An embodiment of this application provides a battery module, including a plurality of battery cell units arranged along a first direction. Each battery cell unit includes a battery cell and a bracket. The battery cell includes an electrode assembly, a battery cell housing, and an electrode terminal. The electrode terminal is connected to the electrode assembly and extends out of the battery cell housing. The battery cell housing includes a body portion and a first sealing portion. The first sealing portion includes a first connection portion, a first bending portion, and a second bending portion. The first connection portion connects the first bending portion and the second bending portion. The first bending portion and the second bending portion are disposed opposite to each other along a third direction. The electrode terminal extends out of the battery cell housing from the first connection portion. The bracket includes a first portion, a first side portion, and a second side portion. The first portion covers a part of the first connection portion. The first side portion covers the first bending portion. The second side portion covers the second bending portion. When viewed along the first direction, in a second direction, a part of the first connection portion is located between the body portion and the first portion, and in the third direction, a part of the first connection portion is located between the first side portion and the second side portion. The first direction, the second direction, and the third direction are perpendicular to each other. By covering a part of the first sealing portion with the bracket, the protection for the first sealing portion is enhanced. By positioning a part of the first connection portion between the body portion and the first portion and between the first side portion and the second side portion, a swelling space can be provided for the first sealing portion, which facilitates pressure relief, reduces the impact of pressure inside the battery cell on the first connection portion, reduces the influence on the sealing performance of the first sealing portion, and also facilitates the heat dissipation of the first sealing portion.

Optionally, in some embodiments of this application, the bracket includes a first extension portion, and the first extension portion extends from the first side portion. The body portion includes a first side edge. The first extension portion covers at least a part of the first side edge, which can protect the body portion and enhance the connection strength between the bracket and the battery cell.

Optionally, in some embodiments of this application, in the second direction, a part of the first side edge and a part of the second sealing portion are provided with the first extension portion, which can protect a part of the body portion, enhance the connection strength between the bracket and the battery cell, and facilitate injection molding of the first extension portion.

Optionally, in some embodiments of this application, in the second direction, the first side edge and the second sealing portion are both provided with the first extension portion, which can better protect the body portion and further enhance the connection strength between the bracket and the battery cell.

Optionally, in some embodiments of this application, the bracket includes a second extension portion, and the second extension portion extends from the second side portion. The body portion includes a second side edge. The first side edge and the second side edge are disposed opposite to each other along the third direction. The second extension portion covers at least a part of the second side edge, which can protect the body portion and further enhance the connection strength between the bracket and the battery cell.

Optionally, in some embodiments of this application, in the second direction, a part of the second side edge and a part of the second sealing portion are provided with the second extension portion, which can protect a part of the body portion, enhance the connection strength between the bracket and the battery cell, and facilitate injection molding of the second extension portion.

Optionally, in some embodiments of this application, in the second direction, the second side edge and the second sealing portion are provided with the second extension portion, which can better protect the body portion and further enhance the connection strength between the bracket and the battery cell.

Optionally, in some embodiments of this application, the battery cell housing includes two second sealing portions disposed along the third direction. One of the second sealing portions is disposed at the first side edge, and the other of the two second sealing portion is disposed at the second side edge. The first extension portion covers at least a part of the one of the the two second sealing portions. The second extension portion covers at least a part of the other of the two second sealing portions, which can protect the second sealing portion.

Optionally, in some embodiments of this application, the body portion includes a first wall. The first connection portion is connected to the first wall. The bracket includes a second connection portion. The second connection portion covers a part of the first wall, protecting the body portion.

Optionally, in some embodiments of this application, the bracket includes a second portion. Along the second direction, the second portion extends from the second connection portion, and the second portion and the first portion are disposed opposite to each other along the second direction. The second portion covers a part of the first connection portion, protecting the first connection portion.

Optionally, in some embodiments of this application, when viewed along the first direction, a part of the first connection portion is located within a first space enclosed by the second connection portion, the first portion, the first side portion, and the second side portion. By protecting a periphery of the first connection portion with the first portion, the first side portion, the second side portion, and the second connection portion, the influence of swelling of the battery cell on the sealing performance of the first sealing portion is reduced, and the first space also achieves the heat dissipation of the battery cell.

Optionally, in some embodiments of this application, along the second direction, a projection of the electrode assembly is located between the first side portion and the second side portion. When pressure inside the battery cell needs to be released promptly, by limiting the positions of the first side portion and the second side portion, the battery cell can break through the first connection portion and a part of the bracket for pressure relief.

Optionally, in some embodiments of this application, the bracket is integrally formed on the battery cell, which facilitates enhancing the connection strength between the bracket and the battery cell.

Optionally, in some embodiments of this application, the battery cell contains an electrolyte, and a part of the electrolyte is attached to an inner wall of the battery cell housing and/or the electrode assembly in a free state.

Optionally, in some embodiments of this application, the body portion includes a first housing and a second housing. The first housing is provided with a first recess, and the second housing is provided with a second recess. The first housing is connected to the second housing to form an accommodating space. A part of the electrode assembly is disposed in the first recess, and another part of the electrode assembly is disposed in the second recess.

Optionally, in some embodiments of this application, the body portion includes a first housing and a second housing. The first housing is provided with a first recess, and the second housing is flat. The first housing is connected to the second housing to form an accommodating space, and the electrode assembly is disposed in the first recess.

Optionally, in some embodiments of this application, the battery cell housing includes two first sealing portions. The two first sealing portions are disposed along the second direction. The battery cell includes two electrode terminals, where one electrode terminal extends out of the battery cell housing from one first sealing portion, and the other electrode terminal extends out of the battery cell housing from the other first sealing portion.

Optionally, in some embodiments of this application, the battery cell includes two electrode terminals, and both electrode terminals extend out of the battery cell housing from the same first sealing portion.

Optionally, in some embodiments of this application, the body portion includes a second wall, a third wall, and a fourth wall. The second wall and the first wall are disposed along the second direction. The third wall and the fourth wall are disposed along the first direction. When viewed along a direction opposite to the second direction, in the first direction, the second connection portion is located between the third wall and the fourth wall. When adjacent battery cell housings are in direct contact with each other, a gap exists between adjacent second connection portions, reducing the pressure exerted by adjacent battery cell housings on the second connection portion, reducing the acting force on the first sealing portion, and facilitating protecting the first sealing portion and enhancing the stability of connecting the bracket to the battery cell.

Optionally, in some embodiments of this application, body portions of adjacent battery cell housings are in direct contact with each other, which facilitates the pressurization of the body portion.

Optionally, in some embodiments of this application, pressure exists between body portions of adjacent battery cell housings, and the plurality of battery cell units are in a pressurized state, which facilitates prolonging the service life of the battery cell units.

Optionally, in some embodiments of this application, a first gap is formed between adjacent first side portions. When adjacent battery cell housings are in direct contact with each other and exert pressure on each other, the first gap between the adjacent first side portions can reduce the acting force on the first side portion, thereby reducing the acting force on the first sealing portion, which facilitates protecting the first sealing portion. The first gap also facilitates the heat dissipation of the battery cell.

Optionally, in some embodiments of this application, a second gap is formed between adjacent second side portions. When adjacent battery cell housings are in direct contact with each other and exert pressure on each other, the second gap between the adjacent second side portions can reduce the acting force on the second side portion, thereby further reducing the acting force on the first sealing portion, which further facilitates protecting the first sealing portion. The second gap also facilitates the heat dissipation of the battery cell.

Optionally, in some embodiments of this application, when viewed along a direction opposite to the second direction, in the first direction, the first side portion does not extend beyond the first extension portion, and the second side portion does not extend beyond the second extension portion, which can reduce the acting force on the first side portion and the second side portion, thereby further reducing the acting force on the first sealing portion, facilitating protecting the first sealing portion.

Optionally, in some embodiments of this application, the bracket includes an insulating bracket, which can reduce the risk of a short circuit between the bracket and the battery cell.

Optionally, in some embodiments of this application, the battery module further includes an elastic member, and the elastic member is disposed between the battery cell unit and the housing. The elastic member can apply pressure to the plurality of battery cell units, enabling the plurality of battery cell units to be in a pressurized state.

Optionally, in some embodiments of this application, the first side portion covers the first bending portion and a part of the first connection portion, which can protect the connection between the first bending portion and the first connection portion, further enhancing the protection for the first sealing portion.

Optionally, in some embodiments of this application, the second side portion covers the second bending portion and a part of the first connection portion, which can protect the connection between the second bending portion and the first connection portion, further enhancing the protection for the first sealing portion.

An embodiment of this application further provides an electric device, including the battery module according to any one of the above embodiments.

The battery module and the electric device enhance the protection for the first sealing portion by covering a part of the first sealing portion with the bracket. By positioning a part of the first connection portion between the body portion and the first portion and between the first side portion and the second side portion, a swelling space can be provided for the first sealing portion, which facilitates pressure relief, reduces the impact of pressure inside the battery cell on the first connection portion, reduces the influence on the sealing performance of the first sealing portion, and also facilitates the heat dissipation of the first sealing portion.

### BRIEF DESCRIPTION OF DRAWINGS

FIG. 1 shows a schematic partial structural diagram of a cell module according to some embodiments.
FIG. 2 shows a schematic structural diagram of a battery cell from another perspective according to some embodiments.
FIG. 3 shows a schematic structural diagram of a battery cell according to some embodiments.
FIG. 4 shows a schematic structural diagram of a battery cell viewed along a direction Y' opposite to a second direction Y according to some embodiments.
FIG. 5 shows a schematic exploded view of a battery cell according to some embodiments.
FIG. 6 shows a schematic structural diagram of a battery cell viewed along a direction Y' opposite to a second direction Y according to some other embodiments.
FIG. 7 shows a schematic structural diagram of the battery cell in an embodiment of FIG. 6.
FIG. 8 shows a schematic structural diagram of a battery cell according to some other embodiments.
FIG. 9 shows a schematic structural diagram of a battery cell and a bracket according to some embodiments.
FIG. 10 shows a schematic structural diagram of a battery cell and a bracket from another perspective according to an embodiment in FIG. 9.
FIG. 11 shows a schematic structural diagram of a portion in FIG. 9 according to some embodiments.
FIG. 12 shows a schematic structural diagram of a battery cell and a bracket viewed along a second direction according to some embodiments.
FIG. 13 shows a schematic cross-sectional view of FIG. 9 along II-II according to some embodiments.
FIG. 14 shows a schematic structural diagram of another portion in FIG. 9 according to some embodiments.
FIG. 15 shows a schematic cross-sectional view of FIG. 9 along III-III according to some embodiments.
FIG. 16 shows a schematic exploded view of a battery module according to some embodiments.
FIG. 17 shows a schematic structural diagram of an electric device according to some embodiments.

**Reference signs of main components:**

| | |
|---|---|
| Battery module | 100 |
| Battery cell unit | 10 |
| Battery cell | 11 |
| Battery cell housing | 11a |
| Electrode assembly | 11b |
| Electrode terminal | 11c |
| Body portion | 111 |
| First housing | 111a |
| First recess | 1111 |
| Second housing | 111b |
| First side edge | 111c |
| Second side edge | 111d |
| First wall | 111e |
| Second wall | 111f |
| Third wall | 111g |
| Fourth wall | 111h |
| Second recess | 1112 |
| First extension edge | 1113 |
| Second extension edge | 1114 |
| First sealing portion | 112 |
| First connection portion | 112a |
| First bending portion | 112b |
| Second bending portion | 112c |
| Second sealing portion | 113 |
| Bracket | 12 |
| First portion | 121 |
| First side portion | 122 |
| First gap | 122a |
| Second side portion | 123 |
| Second gap | 123a |
| First extension portion | 124 |
| Second extension portion | 125 |
| Second connection portion | 126 |
| Second portion | 127 |
| First protrusion | 110 |
| Third recess | 120 |
| Second protrusion | 130 |
| Fourth recess | 140 |
| Housing | 20 |
| Elastic member | 30 |
| Electric device | 200 |
| First direction | X |
| Second direction | Y |
| Third direction | Z |

This application is further described with reference to the accompanying drawings in some following specific embodiments.

### DETAILED DESCRIPTION OF EMBODIMENTS

Some following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

For ease of description, some electrode terminals 11c are not bended.

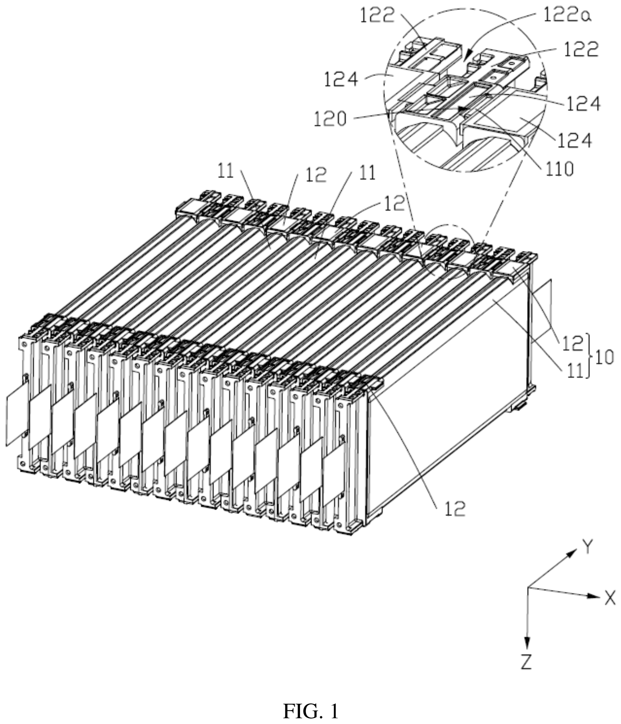

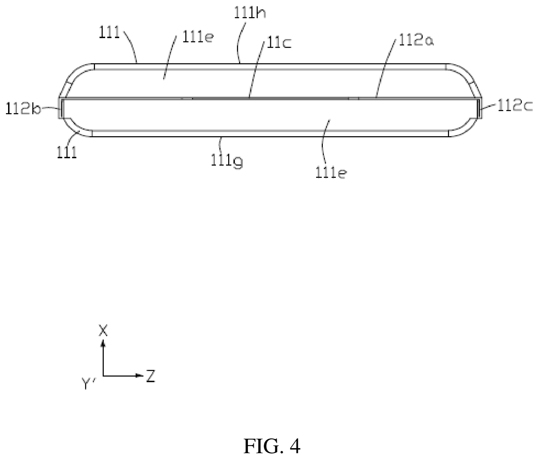

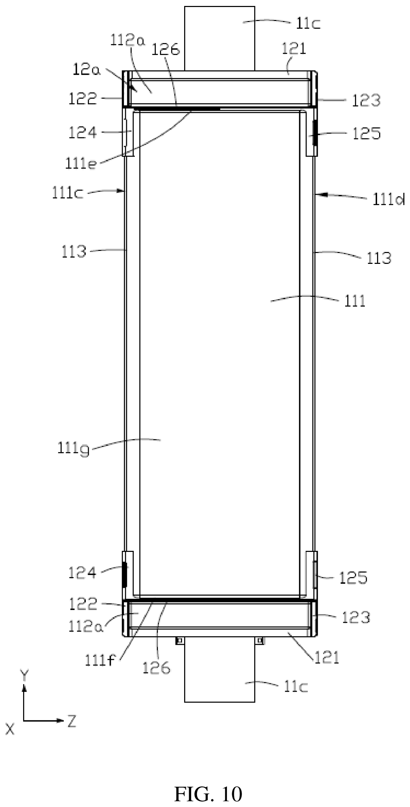

Referring to FIG. 1 to FIG. 5, FIG. 9, and FIG. 10, an embodiment of this application provides a battery module 100, including a plurality of battery cell units 10 arranged along a first direction X. Each battery cell unit 10 includes a battery cell 11 and a bracket 12, and the bracket 12 is connected to the battery cell 11. The battery cell 11 includes a battery cell housing 11a, an electrode assembly 11b, and an electrode terminal 11c. The electrode terminal 11c is connected to the electrode assembly 11b and extends out of the battery cell housing 11a.

The battery cell housing 11a includes a body portion 111 and a first sealing portion 112. The electrode assembly 11b is disposed in the body portion 111. The body portion 111 and the first sealing portion 112 are arranged along a second direction Y. The first sealing portion 112 includes a first connection portion 112a, a first bending portion 112b, and a second bending portion 112c. The first connection portion 112a connects the first bending portion 112b and the second bending portion 112c. The first bending portion 112b and the second bending portion 112c are disposed opposite to each other along a third direction Z. The electrode terminal 11c extends out of the battery cell housing 11a from the first connection portion 112a.

The bracket 12 includes a first portion 121, a first side portion 122, and a second side portion 123. The first portion 121 covers a part of the first connection portion 112a. The first side portion 122 covers the first bending portion 112b. The second side portion 123 covers the second bending portion 112c. When viewed along the first direction X, in the second direction Y, a part of the first connection portion 112a is located between the body portion 111 and the first portion 121, and in the third direction Z, a part of the first connection portion 112a is located between the first side portion 122 and the second side portion 123. The first direction X, the second direction Y, and the third direction Z are perpendicular to each other. By covering a part of the first sealing portion 112 with the bracket 12, the protection for the first sealing portion 112 is enhanced. By positioning a part of the first connection portion 112a between the body portion 111 and the first portion 121 and between the first side portion 122 and the second side portion 123, a swelling space can be provided for the first sealing portion 112, which facilitates pressure relief, reduces the impact of pressure inside the battery cell 11 on the first connection portion 112a, reduces the influence on the sealing performance of the first sealing portion 112, and also facilitates the heat dissipation of the first sealing portion 112.

In an embodiment, one end of the first portion 121 is connected to the first side portion 122, and another end is connected to the second side portion 123, which can enhance the structural strength of the bracket 12, facilitating protecting the first sealing portion 112.

In an embodiment, along the second direction Y, a projection of the electrode assembly 11b is located between a projection of the first side portion 122 and a projection of the second side portion 123. When pressure inside the battery cell 11 needs to be released promptly, by limiting the positions of the first side portion 122 and the second side portion 123, the battery cell 11 can break through the first connection portion 112a and a part of the bracket 12 for pressure relief.

In an embodiment, the bracket 12 is integrally formed on the battery cell 11, which facilitates enhancing the connection strength between the bracket 12 and the battery cell 11. Optionally, the bracket 12 is integrally formed on the battery cell 11 through low-pressure injection molding.

In an embodiment, the bracket 12 includes an insulating bracket, which can reduce the risk of a short circuit between the bracket 12 and the battery cell 11.

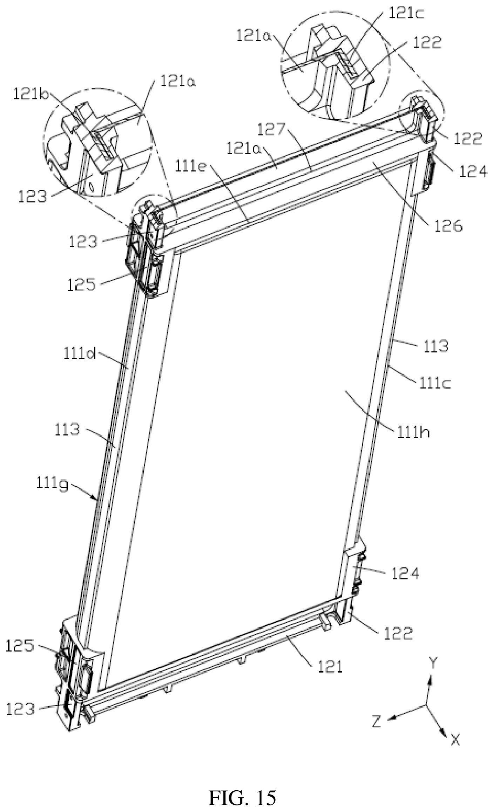

Referring to FIG. 15, in an embodiment, the first side portion 122 covers the first bending portion 112b and a part of the first connection portion 112a, which can protect the connection between the first bending portion 112b and the first connection portion 112a, further enhancing the protection for the first sealing portion 112.

In an embodiment, the second side portion 123 covers the second bending portion 112c and a part of the first connection portion 112a, which can protect the connection between the second bending portion 112c and the first connection portion 112a, further enhancing the protection for the first sealing portion 112.

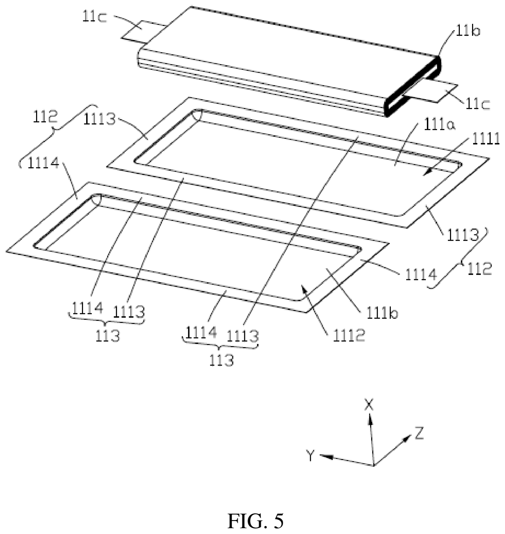

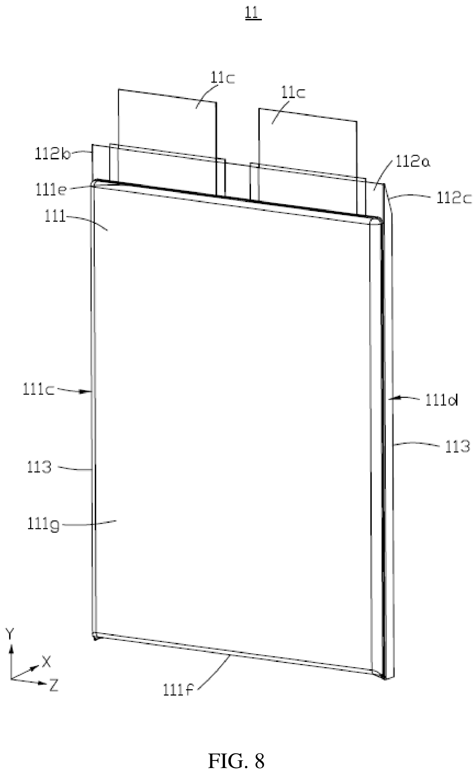

Referring to FIG. 5 and FIG. 8, in an embodiment, the body portion 111 is provided with an accommodating space. The body portion 111 includes a first housing 111a and a second housing 111b. The first housing 111a is provided with a first recess 1111, and the second housing 111b is provided with a second recess 1112. The first housing 111a is connected to the second housing 111b to form the accommodating space. A part of the electrode assembly 11b is disposed in the first recess 1111, and another part is disposed in the second recess 1112. A peripheral side of the first housing 111a extends outward to form a first extension edge 1113, and a peripheral side of the second housing 111b extends outward to form a second extension edge 1114. After the first housing 111a is connected to the second housing 111b, the first extension edge 1113 and the second extension edge 1114 overlap and are hermetically connected.

In an embodiment, the first extension edge 1113 and the second extension edge 1114 overlap and are hermetically connected to form two first sealing portions 112 and two second sealing portions 113. The two first sealing portions 112 are disposed along the second direction Y. The two second sealing portions 113 are disposed along the third direction Z. One of the first sealing portions 112 is connected to the two second sealing portions 113, and the other first sealing portion 112 is connected to the two second sealing portions 113.

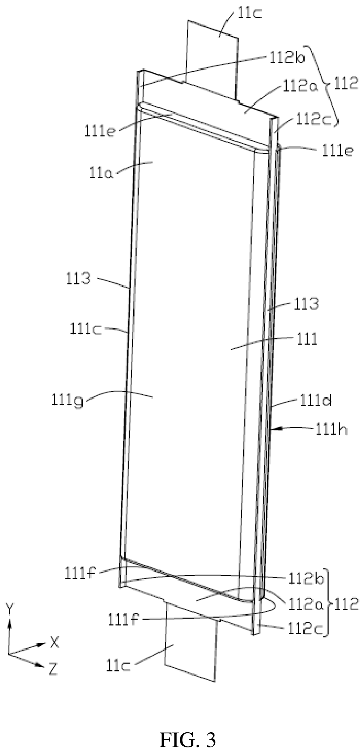

Referring to FIG. 3, optionally, the battery cell 11 includes two electrode terminals 11c, where one electrode terminal 11c extends out of the battery cell housing 11a from one of the first sealing portions 112, and the other electrode terminal 11c extends out of the battery cell housing 11a from the other first sealing portion 112.

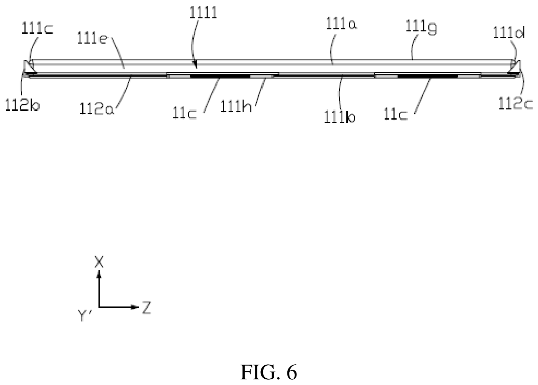

Referring to FIG. 6 to FIG. 8, the battery cell 11 includes two electrode terminals 11c, and the two electrode terminals 11c extend out of the battery cell housing 11a from the same first sealing portion 112.

Referring to FIG. 6 to FIG. 8, in an embodiment, the first extension edge 1113 and the second extension edge 1114 overlap and are hermetically connected to form the first sealing portion 112 and two second sealing portions 113. The two second sealing portions 113 are disposed along the third direction Z. The first sealing portion 112 is connected to the two second sealing portions 113.

Referring to FIG. 6 to FIG. 8, in an embodiment, the battery cell 11 includes two electrode terminals 11c, and the two electrode terminals 11c extend out of the battery cell housing 11a from the first sealing portion 112.

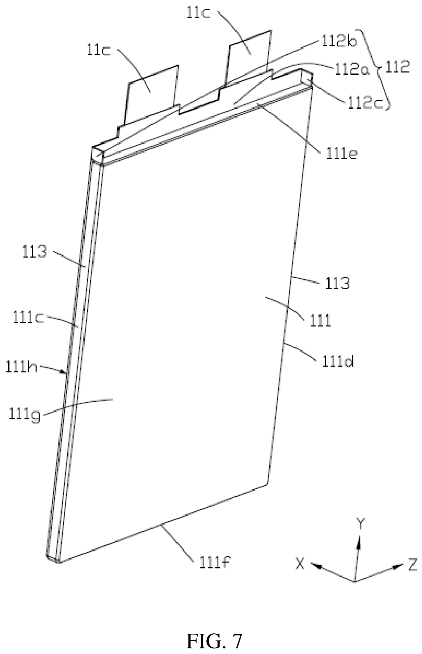

Referring to FIG. 6 and FIG. 7, in an embodiment, the body portion 111 is provided with an accommodating space. The body portion 111 includes the first housing 111a and the second housing 111b. The first housing 111a is provided with the first recess 1111, and the second housing 111b is flat. The first housing 111a is connected to the second housing 111b to form the accommodating space. The electrode assembly 11b is disposed in the first recess 1111.

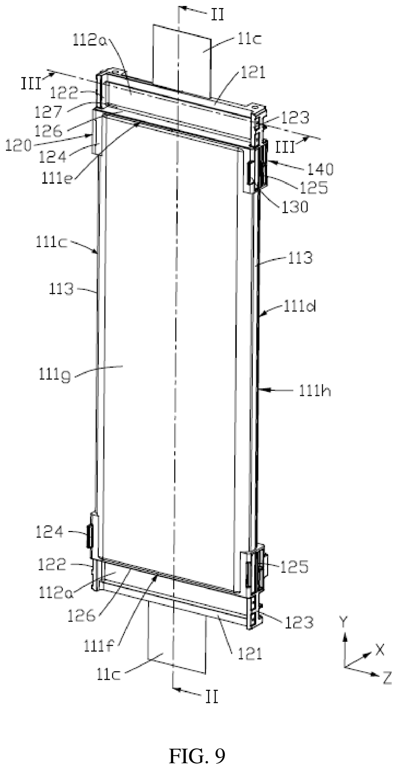

Referring to FIG. 3 and FIG. 9, in an embodiment, the body portion 111 includes a first side edge 111c and a second side edge 111d disposed along the third direction Z. One of the second sealing portions 113 is disposed at the first side edge 111c, and another second sealing portion 113 is disposed at the second side edge 111d.

In an embodiment, the body portion 111 includes a first wall 111e, a second wall 111f, a third wall 111g, and a fourth wall 111h. The second wall 111f and the first wall 111e are disposed along the second direction Y. The third wall 111g and the fourth wall 111h are disposed along the first direction X. Optionally, the first sealing portion 112 is connected to the first wall 111e. Optionally, one of the first sealing portions 112 is connected to the first wall 111e, and another first sealing portion 112 is connected to the second wall 111f.

In an embodiment, the body portion 111 includes two first walls 111e, the second wall 111f, and the first sealing portion 112. The body portion 111 is provided with an accommodating space. The body portion 111 includes the first housing 111a and the second housing 111b. The first housing 111a is provided with the first recess 1111, and the second housing 111b is provided with the second recess 1112. The first housing 111a is connected to the second housing 111b to form the accommodating space. The electrode assembly 11b is disposed in the first recess 1111 and the second recess 1112. Two electrode terminals 11c extend out of the battery cell housing 11a from the same first sealing portion 112. Optionally, one second wall 111f and one first sealing portion 112 are provided, where one of the first walls 111e connects the third wall 111g and the first sealing portion 112, and the other first wall 111e connects the fourth wall 111h and the first sealing portion 112. When viewed along a direction opposite to the second direction Y, in the first direction X, the two first walls 111e are located on opposite sides of the first sealing portion 112. Optionally, two second walls 111f and two first sealing portions 112 are provided, where one of the first walls 111e connects the third wall 111g and one first sealing portion 112, and the other first wall 111e connects the fourth wall 111h and the first sealing portion 112. When viewed along a direction opposite to the second direction Y, in the first direction X, the two first walls 111e are connected to opposite sides of the first sealing portion 112. One of the second walls 111f connects the third wall 111g and the other first sealing portion 112, and the other second wall 111f connects the fourth wall 111h and the other first sealing portion 112. When viewed along the second direction Y, in the first direction X, the two second walls 111f are located on opposite sides of the first sealing portion 112.

Referring to FIG. 6 and FIG. 7, in an embodiment, the body portion 111 includes one first wall 111e, one second wall 111f, and the first sealing portion 112. The body portion 111 is provided with an accommodating space. The body portion 111 includes the first housing 111a and the second housing 111b. The first housing 111a is provided with the first recess 1111, and the second housing 111b is flat. The first housing 111a is connected to the second housing 111b to form the accommodating space. The electrode assembly 11b is disposed in the first recess 1111. Two electrode terminals 11c extend out of the battery cell housing 11a from the same first sealing portion 112. Optionally, one first sealing portion 112 is provided, where the first wall 111e connects the third wall 111g and the first sealing portion 112, and the second wall 111f connects the third wall 111g. Optionally, two first sealing portions 112 are provided, where the first wall 111e connects the third wall 111g and one first sealing portion 112, and the second wall 111f connects the third wall 111g and the other first sealing portion 112.

Referring to FIG. 3, in an embodiment, the body portion 111 includes two first walls 111e, two second walls 111f, and two first sealing portions 112. One of the first walls 111e connects the third wall 111g and one first sealing portion 112, and the other first wall 111e connects the fourth wall 111h and the first sealing portion 112. One of the second walls 111f connects the third wall 111g and the other first sealing portion 112, and the other second wall 111f connects the fourth wall 111h and the other first sealing portion 112. One of the electrode terminals 11c extends out of the battery cell housing 11a from one of the first sealing portions 112, and the other electrode terminal 11c extends out of the battery cell housing 11a from the other first sealing portion 112.

When viewed along a direction Y' opposite to the second direction Y, in the first direction X, the two first walls 111e are connected to opposite sides of the first sealing portion 112. When viewed along the second direction Y, in the first direction X, the two second walls 111f are located on opposite sides of the second sealing portion 113.

In an embodiment, the body portion 111 includes one first wall 111e, one second wall 111f, and two first sealing portions 112. The first wall 111e connects the third wall 111g and one first sealing portion 112, and the second wall 111f connects the third wall 111g and the other first sealing portion 112. The body portion 111 is provided with an accommodating space. The body portion 111 includes the first housing 111a and the second housing 111b. The first housing 111a is provided with the first recess 1111, and the second housing 111b is flat. The first housing 111a is connected to the second housing 111b to form the accommodating space. The electrode assembly 11b is disposed in the first recess 1111. One of the electrode terminals 11c extends out of the battery cell housing 11a from one of the first sealing portions 112, and the other electrode terminal 11c extends out of the battery cell housing 11a from the other first sealing portion 112.

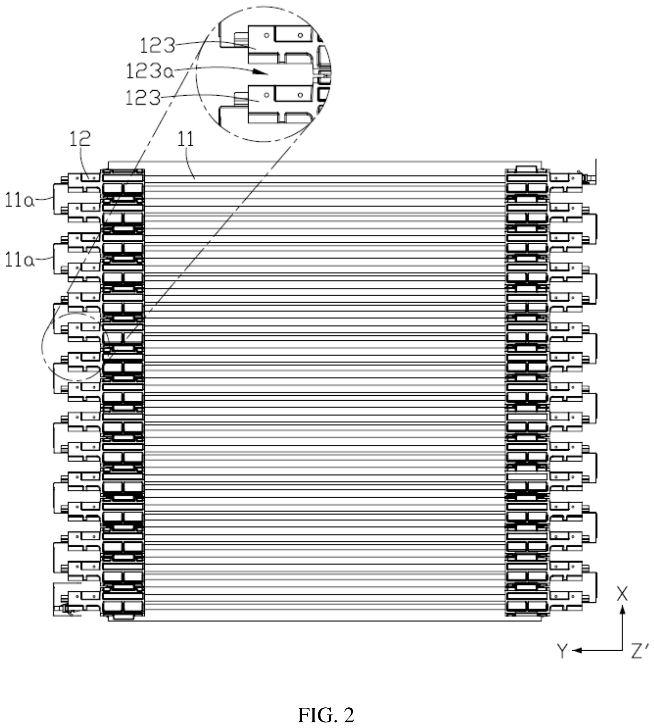

Referring to FIG. 1 and FIG. 2, in an embodiment, body portions 111 of adjacent battery cells are in direct contact with each other, which facilitates the pressurization of the body portion 111. Optionally, the third wall 111g of the battery cell housing 11a is in direct contact with the fourth wall 111h of an adjacent battery cell housing 11a. Optionally, the third wall 111g of the battery cell housing 11a is in direct contact with the third wall 111g of an adjacent battery cell housing 11a, and the fourth wall 111h of the battery cell housing 11a is in direct contact with the fourth wall 111h of an adjacent battery cell housing 11a.

In an embodiment, pressure exists between adjacent battery cell housings 11a, so that the plurality of battery cell units 10 are in a pressurized state, which facilitates prolonging the service life of the battery cell units 10.

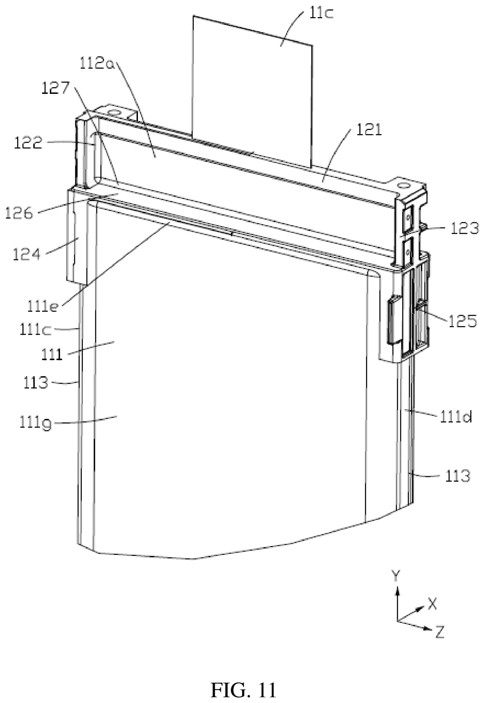

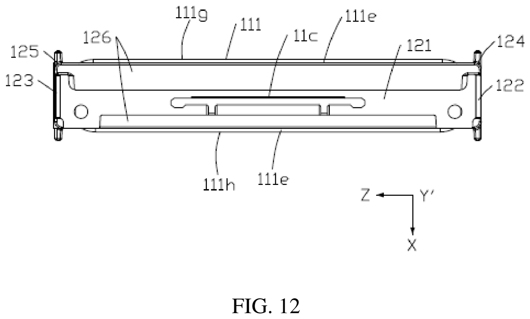

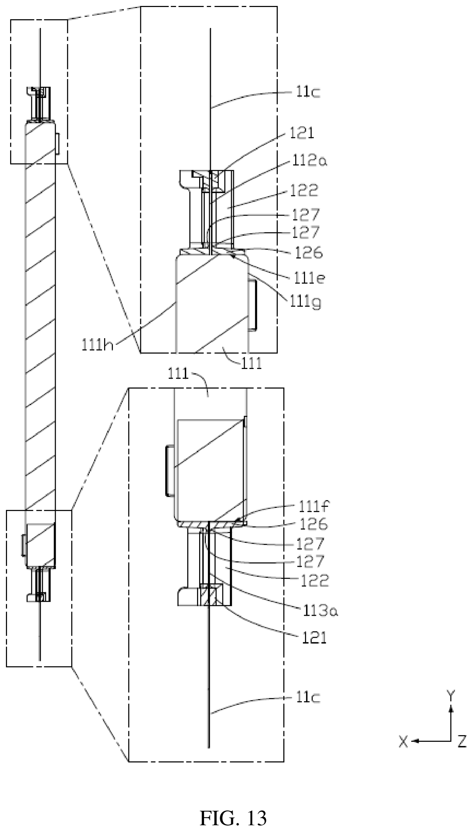

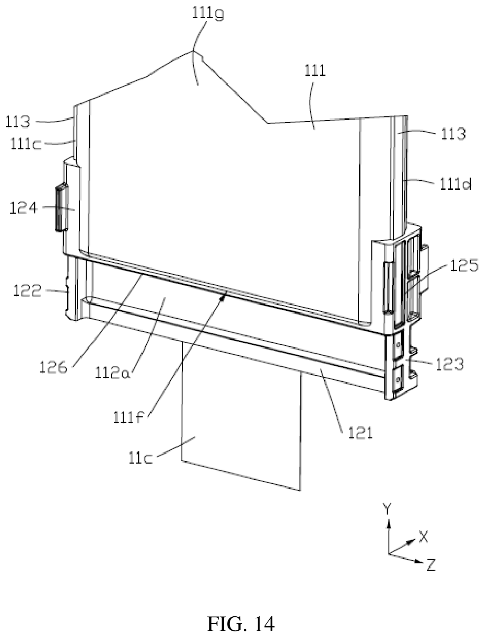

Referring to FIG. 9 to FIG. 14, in an embodiment, the bracket 12 includes a first extension portion 124. When viewed along a direction Y' opposite to the second direction Y, the first extension portion 124 extends from the first side portion 122. The first extension portion 124 covers the first side edge 111c and the second sealing portion 113, which can protect the body portion 111 and the second sealing portion 113 and enhance the connection strength between the bracket 12 and the battery cell 11.

Optionally, in the second direction Y, a part of the first side edge 111c and a part of the second sealing portion 113 are provided with the first extension portion 124, which can protect a part of the body portion 111 and a part of the second sealing portion 113, enhance the connection strength between the bracket 12 and the battery cell 11, and facilitate integral forming of the bracket 12 on the battery cell 11.

Optionally, in the second direction Y, both the entirety of the first side edge 111c and the entirety of the second sealing portion 113 are provided with the first extension portion 124, which can better protect the body portion 111 and the second sealing portion 113 and further enhance the connection strength between the bracket 12 and the battery cell 11.

In an embodiment, when viewed along a direction Y' opposite to the second direction Y, in the first direction X, the first side portion 122 does not extend beyond the first extension portion 124, and a first gap 122a is formed between adjacent first side portions 122. When adjacent battery cell housings 11a are in direct contact with each other and exert pressure on each other, the first gap 122a between the adjacent first side portions 122 can reduce the acting force on the first side portion 122, thereby reducing the acting force on the first sealing portion 112, which facilitates protecting the first sealing portion 112. The first gap 122a also facilitates the heat dissipation of the battery cell 11.

In an embodiment, the bracket 12 includes a second extension portion 125. When viewed along a direction Y' opposite to the second direction Y, the second extension portion 125 extends from the second side portion 123. The second extension portion 125 covers the second side edge 111d and another second sealing portion 113, which can protect the body portion 111 and another second sealing portion 113 and further enhance the connection strength between the bracket 12 and the battery cell 11. When viewed along the first direction X, in the third direction Z, the body portion 111 is located between the first extension portion 124 and the second extension portion 125.

Optionally, in the second direction Y, a part of the second side edge 111d and a part of another second sealing portion 113 are provided with the second extension portion 125, which can protect a part of the body portion 111 and a part of the second sealing portion 113, enhance the connection strength between the bracket 12 and the battery cell 11, and facilitate integral forming of the bracket 12 on the battery cell 11.

Optionally, in the second direction Y, the entirety of the second side edge 111d and the entirety of another second sealing portion 113 are provided with the second extension portion 125, which can better protect the body portion 111 and the second sealing portion 113 and further enhance the connection strength between the bracket 12 and the battery cell 11.

In an embodiment, when viewed along a direction Y' opposite to the second direction Y, in the first direction X, the second side portion 123 does not extend beyond the second extension portion 125, and a second gap 123a is formed between adjacent second side portions 123. When adjacent battery cell housings 11a are in direct contact with each other and exert pressure on each other, the second gap 123a between the adjacent second side portions 123 can reduce the acting force on the second side portion 123, further reducing the acting force on the first sealing portion 112, which further facilitates protecting the first sealing portion 112. The second gap 123a also facilitates the heat dissipation of the battery cell 11.

Referring to FIG. 1 and FIG. 9, in some embodiments, along the first direction X, the bracket 12 includes a first protrusion 110 and a third recess 120. The third recess 120 is provided at the first extension portion 124, and the first protrusion 110 extends from the first extension portion 124. When body portions 111 of adjacent battery cells 11 are in direct contact with each other, the first protrusion 110 is disposed in the third recess 120 of an adjacent bracket 12, and a gap exists between the first protrusion 110 and the third recess 120. Adjacent brackets 12 are positioned through the third recess 120 and the first protrusion 110, reducing the offset of adjacent body portions 111 and facilitating the application of pressure among a plurality of body portions 111. The gap between the first protrusion 110 and the third recess 120 can reduce the stress on the bracket 12, enhance the protection for the first sealing portion 112, and enhance the connection strength between the bracket 12 and the battery cell 11.

In some embodiments, along the first direction X, the bracket 12 includes a second protrusion 130 and a fourth recess 140. The fourth recess 140 is provided at the second extension portion 125, and the second protrusion 130 extends from the second extension portion 125. When body portions 111 of adjacent battery cells 11 are in direct contact with each other, the second protrusion 130 is disposed in the fourth recess 140 of an adjacent bracket 12, and a gap exists between the second protrusion 130 and the fourth recess 140. Adjacent brackets 12 are further positioned through the fourth recess 140 and the second protrusion 130, further reducing the offset of adjacent body portions 111 and further facilitating the application of pressure among a plurality of body portions 111. The gap between the second protrusion 130 and the fourth recess 140 can reduce the stress on the bracket 12, further enhance the protection for the first sealing portion 112, and further enhance the connection strength between the bracket 12 and the battery cell 11.

Referring to FIG. 9 to FIG. 12, in an embodiment, the bracket 12 includes a second connection portion 126. The second connection portion 126 covers a part of the first wall 111e, protecting the body portion 111. One end of the first portion 121 is connected to the first side portion 122, and another end is connected to the second side portion 123. One end of the second connection portion 126 is connected to the first side portion 122, and another end is connected to the second side portion 123, which can further enhance the structural strength of the bracket 12, further facilitating protecting the first sealing portion 112. The second connection portion 126, the first portion 121, the first side portion 122, and the second side portion 123 enclose a first space 12a, and a part of the first connection portion 112a is located in the first space 12a. By protecting the periphery of the first connection portion 112a with the first portion 121, the first side portion 122, the second side portion 123, and the second connection portion 126, the influence of swelling of the battery cell 11 on the sealing performance of the first sealing portion 112 is reduced, and the first space 12a also achieves the heat dissipation of the battery cell 11.

In an embodiment, when viewed along a direction Y' opposite to the second direction Y, in the first direction X, the second connection portion 126 is located between the third wall 111g and the fourth wall 111h, the second connection portion 126 does not extend beyond the third wall 111g in the first direction X, and the second connection portion 126 does not extend beyond the fourth wall 111h in the first direction X. When adjacent battery cell housings 11a are in direct contact with each other, a gap exists between adjacent second connection portions 126, reducing the pressure exerted by adjacent battery cell housings 11a on the second connection portion 126, reducing the acting force on the first sealing portion 112, which facilitates protecting the first sealing portion 112 and enhancing the stability of connecting the bracket 12 to the battery cell 11.

In some embodiments, the body portion 111 includes a plurality of first walls 111e, and the bracket 12 correspondingly includes a plurality of second connection portions 126. Optionally, some first walls 111e are provided with the second connection portions 126. Optionally, each first wall 111e is provided with one second connection portion 126.

Referring to FIG. 9 to FIG. 13, in an embodiment, the bracket 12 includes a second portion 127, and the second portion 127 is connected to a side of the second connection portion 126, the side of the second connection portion 126 being a side facing the first portion 121. The second portion 127 extends from the second connection portion 126 along the second direction Y, and the second portion 127 covers a part of the first connection portion 112a. Through the second portion 127, the part of the first sealing portion 112 extends out of the second connection portion 126 can be supported and protected, reducing the risk of damage to the first sealing portion 112 that could affect the sealing performance of the battery cell 11.

In some embodiments, the body portion 111 includes a plurality of first walls 111e, and the bracket 12 includes a plurality of second portions 127 and a plurality of second connection portions 126. Optionally, some second portions 127 are connected to the second connection portions 126. Optionally, each second portion 127 is connected to one second connection portion 126.

In an embodiment, the battery cell 11 includes an electrolyte, and the electrolyte is disposed in the battery cell housing 11a. The electrode assembly 11b includes a first electrode plate, a separator, and a second electrode plate. The electrode assembly is formed by winding or stacking the first electrode plate, the separator, and the second electrode plate. A part of the electrolyte infiltrates the first electrode plate, the separator, and the second electrode plate for transferring electrical ions, and a part of the electrolyte is attached to the surface of the battery cell housing 11a and/or the surface of the electrode assembly 11b in a free state, where the electrolyte in the free state is a free electrolyte. During cycling of a plurality of battery cells 11, the free electrolyte in the battery cell 11 is extruded. In this application, the first space 12a provides the swelling space for the first sealing portion 112, reducing the influence of swelling of the battery cell 11 on the sealing performance of the first sealing portion 112.

Referring to FIG. 9 to FIG. 14, in an embodiment, the battery cell unit 10 includes two brackets 12, where one of the brackets 12 is connected to a part of the first sealing portion 112, and the other bracket 12 is connected to a part of another first sealing portion 112. One of the electrode terminals 11c extends out of the first sealing portion 112 and the bracket 12 along the second direction Y, and the other electrode terminal 11c extends out of the second sealing portion 113 and the bracket 12 along a direction opposite to the second direction Y.

The two brackets 12 enhance the protection for the first sealing portion 112 and the second sealing portion 113 and provide a swelling space for the first sealing portion 112, thereby reducing the influence of gas production and/or a free electrolyte in the battery cell 11 on the sealing performance of the first sealing portion 112, and facilitating the heat dissipation of the first sealing portion 112.

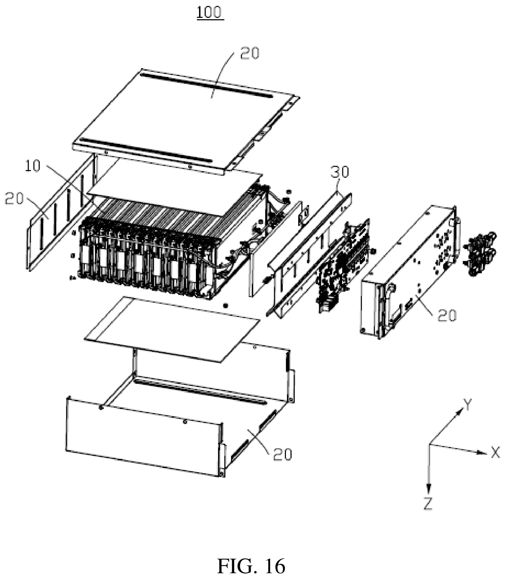

Referring to FIG. 16, in an embodiment, the battery module 100 further includes a housing 20. The battery cell unit 10 is disposed in the housing 20, and when the battery cell unit 10 is disposed in the housing 20, the battery cell unit 10 is in a pressurized state.

In an embodiment, the battery module 100 further includes an elastic member 30, and the elastic member 30 is disposed between the battery cell unit 10 and the housing 20. The elastic member 30 can apply pressure to a plurality of battery cell units 10, enabling the plurality of battery cell units 10 to be in a pressurized state.

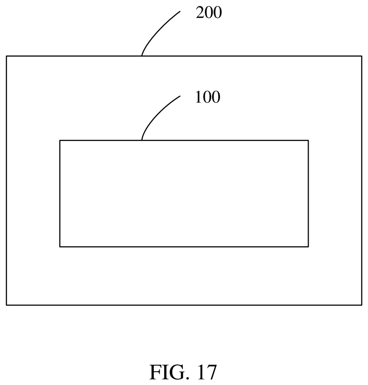

Referring to FIG. 17, this application further provides an electric device 200 using the above battery module 100. In an embodiment, the electric device 200 in this application may be, but is not limited to, an electronic device, a drone, a backup power source, an electric vehicle, an electric motorcycle, an electric motor bicycle, an electric tool, or a large household battery module.

Those of ordinary skill in the art should appreciate that some above embodiments are for description of this application only but not for limiting this application. Appropriate modifications and variations made to some above embodiments without departing from the essential spirit and scope of this application all fall within the scope of this application.

## Claims

1. A battery module, comprising:
a plurality of battery cell units arranged along a first direction, each battery cell unit comprising a battery cell and a bracket; the battery cell comprising an electrode assembly, a battery cell housing, and an electrode terminal; and the electrode terminal is connected to the electrode assembly and extends out of the battery cell housing;
the battery cell housing comprising a body portion and a first sealing portion, the electrode assembly is disposed in the body portion; the first sealing portion comprising a first connection portion, a first bending portion, and a second bending portion; the first connection portion connecting the first bending portion and the second bending portion, the first bending portion and the second bending portion are disposed opposite to each other along a third direction, and the electrode terminal extends out of the battery cell housing from the first connection portion;
the bracket comprising a first portion, a first side portion, and a second side portion; the first portion covers a part of the first connection portion, the first side portion covers the first bending portion, the second side portion covers the second bending portion, and the electrode terminal extends from the first portion; and
when viewed along the first direction, in a second direction, a part of the first connection portion is located between the body portion and the first portion, and in the third direction, a part of the first connection portion is located between the first side portion and the second side portion;
wherein the first direction, the second direction, and the third direction are perpendicular to each other.

2. The battery module according to claim 1, wherein the bracket comprises a first extension portion, the first extension portion extends from the first side portion, the body portion comprises a first side edge, and the first extension portion covers at least a part of the first side edge.

3. The battery module according to claim 2, wherein the bracket comprises a second extension portion, the second extension portion extends from the second side portion, the body portion comprises a second side edge, the first side edge and the second side edge are disposed opposite to each other along the third direction, and the second extension portion covers at least a part of the second side edge.

4. The battery module according to claim 3, wherein the battery cell housing comprises two second sealing portions disposed along the third direction, one of the two second sealing portions is disposed at the first side edge, and the other of the two second sealing portions is disposed at the second side edge;
the first extension portion covering at least a part of the one of the the two second sealing portions, and the second extension portion covering at least a part of the other of the two second sealing portions .

5. The battery module according to claim 3, wherein, when viewed along a direction opposite to the second direction, in the first direction, the first side portion does not extend beyond the first extension portion, and the second side portion does not extend beyond the second extension portion.

6. The battery module according to any one of claims 1 to 5, wherein the body portion comprises a first wall, the first connection portion is connected to the first wall, the bracket comprises a second connection portion, and the second connection portion covers a part of the first wall.

7. The battery module according to claim 6, wherein the bracket comprises a second portion; along the second direction, the second portion extends from the second connection portion, the second portion and the first portion are disposed opposite to each other along the second direction, and the second portion covers a part of the first connection portion.

8. The battery module according to claim 6 or 7, wherein, when viewed along the first direction, a part of the first connection portion is located within a first space enclosed by the second connection portion, the first portion, the first side portion, and the second side portion.

9. The battery module according to any one of claims 1 to 8, wherein along the second direction, a projection of the electrode assembly is located between a projection of the first side portion and a projection of the second side portion.

10. The battery module according to any one of claims 1 to 9, wherein the bracket is integrally formed on the battery cell.

11. The battery module according to any one of claims 1 to 10, wherein the battery cell contains an electrolyte, and a part of the electrolyte is attached to an inner wall of the battery cell housing and/or the electrode assembly in a free state.

12. The battery module according to any one of claims 1 to 11, wherein the body portion comprises a first housing and a second housing, the first housing is provided with a first recess, the second housing is provided with a second recess, the first housing is connected to the second housing to form an accommodating space, a part of the electrode assembly is disposed in the first recess, and another part of the electrode assembly is disposed in the second recess.

13. The battery module according to any one of claims 1 to 11, wherein the body portion comprises a first housing and a second housing, the first housing is provided with a first recess, the second housing is flat, the first housing is connected to the second housing to form an accommodating space, and the electrode assembly is disposed in the first recess.

14. The battery module according to any one of claims 1 to 13, wherein the battery cell housing comprises two first sealing portions, the two first sealing portions are disposed along the second direction, the battery cell comprises two electrode terminals, one of the electrode terminals extends out of the battery cell housing from one first sealing portion, and the other electrode terminal extends out of the battery cell housing from the other first sealing portion.

15. The battery module according to any one of claims 1 to 13, wherein the battery cell comprises two electrode terminals, and both electrode terminals extend out of the battery cell housing from the same first sealing portion.

16. The battery module according to claim 6, wherein the body portion comprises a second wall, a third wall, and a fourth wall; the second wall and the first wall are disposed along the second direction, and the third wall and the fourth wall are disposed along the first direction; and when viewed along a direction opposite to the second direction, in the first direction, the second connection portion is located between the third wall and the fourth wall.

17. The battery module according to any one of claims 1 to 16, wherein body portions of adjacent battery cell housings are in direct contact with each other.

18. The battery module according to any one of claims 1 to 17, wherein pressure exists between body portions of the adjacent battery cell housings.

19. The battery module according to any one of claims 1 to 18, wherein a first gap is formed between adjacent first side portions.

20. The battery module according to claim 19, wherein a second gap is formed between adjacent second side portions.

21. The battery module according to any one of claims 1 to 20, wherein the bracket comprises an insulating bracket.

22. An electric device, comprising the battery module according to any one of claims 1 to 21.
